# EUROPEAN PATENT APPLICATION

(11) **EP 4 712 241 A1**
(43) Date of publication of application: **18.03.2026**
(21) Application number: 24904358.9
(22) Date of filing: 11.12.2024
(51) Int. Cl.: H01M 50/30, H01M 50/342, H01M 50/271

(54) **BATTERY ASSEMBLY AND BATTERY PACK COMPRISING SAME**

(30) Priority: 13.12.2023 KR 20230180316
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2024/096653
(87) International publication number: WO 2025/127793

(57) **Abstract**

A battery assembly includes a cell block including a plurality of battery cells, and a frame covering at least one surface of the cell block. The frame includes a plurality of venting holes that exhausts gas, and each of the plurality of venting holes has a width of about 0.01 mm or more and less than 0.61 m.

## Description

### [Technical Field]

The present disclosure relates to a battery assembly and a battery pack including the same.

This application is based on and claims priority from Korean Patent Application No. 10-2023-0180316, filed on December 13, 2023, with the Korean Intellectual Property Office, the disclosure of which is incorporated herein in its entirety by reference.

### [Background]

Unlike primary batteries, secondary batteries can be charged and discharged multiple times. Secondary batteries are widely used as power sources for various wireless devices such as handsets, laptops, and cordless vacuum cleaners. With the recent improvements in energy density and economies of scale, the manufacturing cost per unit capacity of secondary batteries has been dramatically reduced, and the driving range of battery electric vehicles (BEVs) has increased to a level comparable to that of internal combustion engine vehicles, leading to a shift in the primary application of secondary batteries from mobile devices to mobilities, such as BEVs.

As secondary batteries are increasingly used in mobilities, the demand for enhanced safety of these secondary batteries is growing. For example, when an accident such as a fire, occurs in a secondary battery used in a mobility, it may endanger the life of the driver. Therefore, research on technologies to improve the safety of secondary batteries is essential.

### [Summary]

### [Technical Problem]

The problem that the technical ideas of the present disclosure seek to solve is to provide a battery assembly capable of suppressing flame generation, and a battery pack including the same.

### [Technical Solution]

To solve the above-mentioned problems, the technical concept of the present disclosure provides a battery assembly including a cell block, which in turn includes a plurality of battery cells, and a frame covering at least one surface of the cell block. The frame includes a plurality of venting holes configured to exhaust gas, and each of the plurality of venting holes has a width of about 0.01 mm or more and less than 0.61 mm.

In an embodiment, the frame includes a top cover plate facing a top surface of the cell block, a bottom cover plate facing a bottom surface of the cell block, a first side cover plate facing a first side surface of the cell block, and a second side cover plate facing a second side surface of the cell block, and the top cover plate includes the plurality of venting holes.

In an embodiment, the top cover plate includes a first main plate including a plurality of holes, and a first mesh plate including the plurality of venting holes and coupled to the first main plate. The plurality of venting holes are arranged in each of areas of the first mesh plate that overlap the plurality of holes in the first main plate.

In an embodiment, the frame includes a top cover plate facing a top surface of the cell block, a bottom cover plate facing a bottom surface of the cell block, a first side cover plate facing a first side surface of the cell block, and a second side cover plate facing a second side surface of the cell block, and the bottom cover plate includes the plurality of venting holes.

In an embodiment, the frame includes a top cover plate facing a top surface of the cell block, a bottom cover plate facing a bottom surface of the cell block, a first side cover plate facing a first side surface of the cell block, and a second side cover plate facing a second side surface of the cell block, and at least one of the first side cover plate and the second side cover plate includes the plurality of venting holes.

In an embodiment, at least one of the first side cover plate and the second side cover plate includes a second main plate including a plurality of holes, and a second mesh plate including the plurality of venting holes and coupled to the second main plate. The plurality of venting holes are arranged in each of areas of the second mesh plate that overlap the plurality of holes in the second main plate.

In an embodiment, the frame includes a plurality of venting areas, and the plurality of venting holes are arranged at equal intervals in each of the plurality of venting areas.

In an embodiment, within each of the plurality of venting areas, the number of plurality of venting holes ranges from 10 to 100.

In an embodiment, the frame has a single piece structure.

In an embodiment, the frame includes a top cover plate facing a top surface of the cell block, a bottom cover plate facing a bottom surface of the cell block, a first side cover plate facing a first side surface of the cell block, and a second side cover plate facing a second side surface of the cell block, and the plurality of battery cells are stacked in a first direction between the first side cover plate and the second side cover plate.

In addition, the present disclosure provides a battery pack including a pack housing, and a battery assembly accommodated in the pack housing, and a pack cover coupled to the pack housing to cover the battery assembly. The battery assembly includes a cell block including a plurality of battery cells, and a frame covering a surface of at least one of the cell block. The frame includes a plurality of venting holes configured to exhaust gas, and the width of each of the plurality of venting holes is about 0.01 mm or more and less than 0.61 mm.

In an embodiment, the frame includes a top cover plate facing a top surface of the cell block, a bottom cover plate facing a bottom surface of the cell block, a first side cover plate facing a first side surface of the cell block, and a second side cover plate facing a second side surface of the cell block. The top cover plate includes the plurality of venting holes.

In an embodiment, the top cover plate includes a plurality of venting areas, and the plurality of venting holes are arranged at equal intervals in each of the plurality of venting areas.

In an embodiment, the top cover plate includes a first main plate including a plurality of holes, and a first mesh plate including the plurality of venting holes and coupled to the first main plate. The plurality of venting holes are arranged at equal intervals in each of areas of the first mesh plate that overlap the plurality of holes in the first main plate.

In an embodiment, the frame includes a top cover plate facing a top surface of the cell block, a bottom cover plate facing a bottom surface of the cell block, a first side cover plate facing a first side surface of the cell block, and a second side cover plate facing a second side surface of the cell block. At least one of the first side cover plate and the second side cover plate includes the plurality of venting holes.

### [Advantageous Effects]

In an embodiment, venting holes are formed in the frame of the battery cell block, and the size of each of the venting holes is configured to have a size to block the discharge of spark particles. As a result, spark particles generated by a short circuit between a cathode and an anode at the cell level may be prevented from escaping to the external space of the frame. This configuration may eliminate the ignition source, which is one of the three elements of flame/fire, and thus suppress flame generation within the battery pack.

The effects that may be obtained from the embodiments of the present disclosure are not limited to the effects mentioned above, and other effects not mentioned may be clearly derived and understood by those ordinarily skilled in the art to which the embodiments of the present disclosure belong, from the following description. In other words, unintended effects resulting from the implementation of the embodiments of the present disclosure may also be derived by those ordinarily skilled in the art from the embodiments of the present disclosure.

### [Brief Description of the Drawings]

FIG. 1 is an exploded perspective view illustrating a battery assembly according to an embodiment of the present disclosure.
FIG. 2 is a perspective view illustrating a battery assembly according to an embodiment of the present disclosure.
FIG. 3 is a view illustrating a portion of the battery assembly according to an embodiment of the present disclosure.
FIG. 4 is a cross-sectional view of the battery assembly taken along line AA-AA' in FIG. 3.
FIG. 5 is a cross-sectional view illustrating a portion of the battery assembly according to an embodiment of the present disclosure.
FIG. 6 is a cross-sectional view illustrating a frame of the battery assembly according to an embodiment of the present disclosure.
FIG. 7 is a cross-sectional view illustrating a portion of the battery assembly according to an embodiment of the present disclosure.
FIG. 8 is a cross-sectional view illustrating a portion of the battery assembly according to an embodiment of the present disclosure.
FIG. 9 is a cross-sectional view illustrating a portion of the battery assembly according to an embodiment of the present disclosure.
FIG. 10 is a cross-sectional view illustrating a portion of the battery assembly according to an embodiment of the present disclosure.
FIG. 11 is a perspective view illustrating a battery pack according to an embodiment of the present disclosure.
FIG. 12 is a schematic perspective view of a vehicle including a battery pack according to an embodiment of the present disclosure.

### [Best Mode for Carrying out the Invention]

Hereinafter, embodiments of the present disclosure will be described in detail with reference to the accompanying drawings. Before proceeding, the terms and words used in this specification and claims should not be construed as being limited to their ordinary or dictionary meanings. Rather, the terms and words should be interpreted in a manner consistent with the technical spirit of the present disclosure, based on the principle that an inventor may appropriately define terms as needed to explain his or her invention in the best way.

Accordingly, the embodiments described in this specification and the configurations illustrated in the drawings are merely some of the embodiments of the present disclosure, and do not represent all the technical ideas of the present disclosure. Therefore, it should be understood that, at the time of filing the present application, various equivalents and modifications that can replace these embodiments may exist.

In describing the present disclosure, detailed explanations of related known functions and configurations will be omitted when it is determined that such detailed explanations may obscure the gist of the present disclosure.

The embodiments of the present disclosure are provided to more fully explain the present disclosure to those skilled in the art, and therefore, the shapes, sizes, and other aspects of the components shown in the drawings may be exaggerated, omitted, or schematically illustrated for the sake of clearer explanation. Therefore, the sizes or proportions of the components may not fully reflect their actual sizes or proportions.

As used in this specification, the terms "about," "approximately," and "substantially" are understood to refer to a range or approximation of a numerical value or degree, considering inherent manufacturing and material tolerances.

### (First Embodiment)

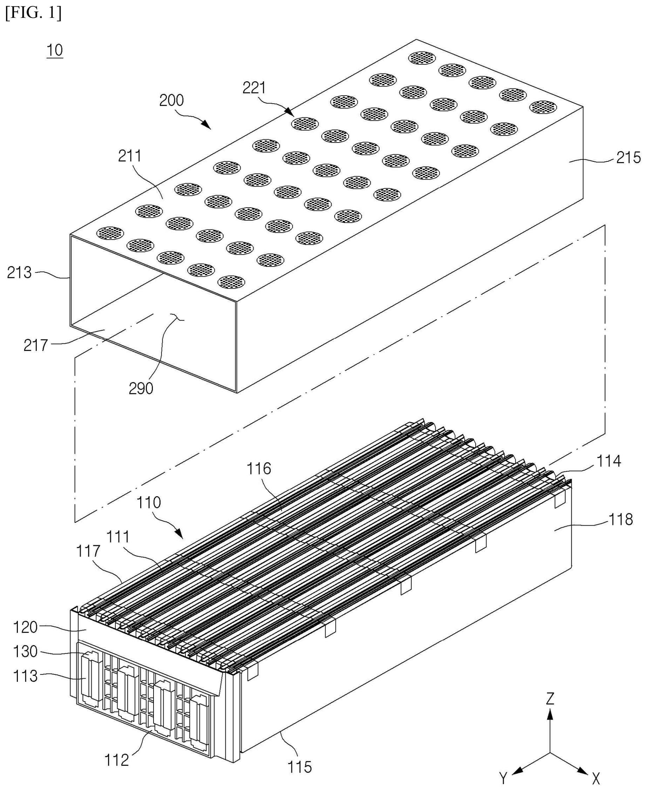

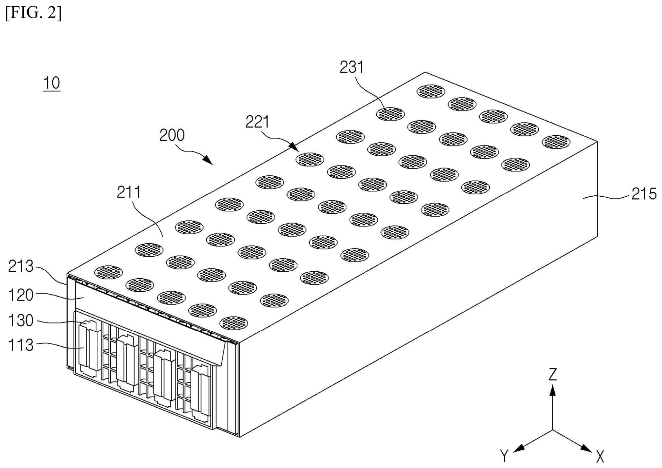

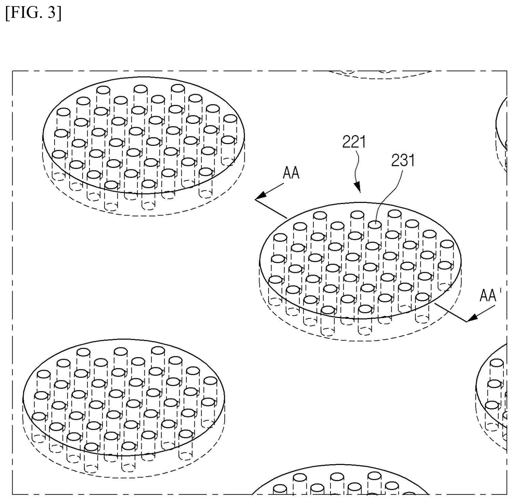

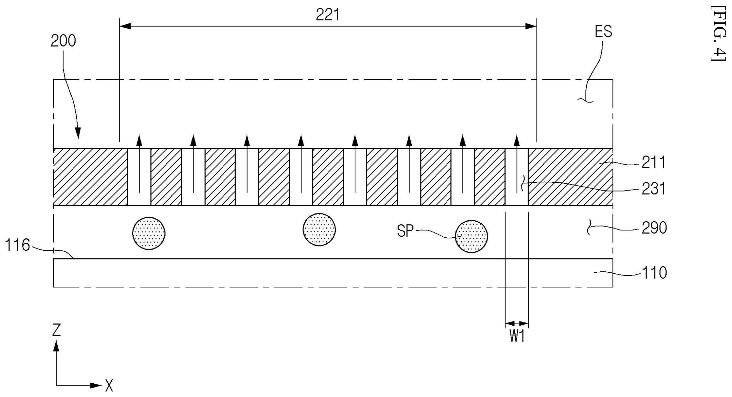

FIG. 1 is an exploded perspective view illustrating a battery assembly 10 according to an embodiment of the present disclosure. FIG. 2 is a perspective view illustrating the battery assembly 10 according to an embodiment of the present disclosure. FIG. 3 is a view illustrating a portion of the battery assembly 10 according to an embodiment of the present disclosure. FIG. 4 is a cross-sectional view of the battery assembly 10 taken along line AA-AA' in FIG. 3.

Referring to FIGS. 1 to 4, the battery assembly 10 may include a cell block 110, a busbar frame 120, a plurality of busbars 130, and a frame 200. Here, the battery assembly 10 may be a battery module including a plurality of secondary battery cells.

The cell block 110 may include a plurality of battery cells 111. In an embodiment, each of the individual battery cells 111 is a basic unit of a lithium ion battery, *e.g.,* a secondary battery. Each of the battery cells 111 may include an electrode assembly, an electrolyte, and a cell case. The electrode assembly built into the cell case may include a cathode, an anode, and a separator interposed between the cathode and the anode. The electrode assembly may be either a jelly-roll type or a stack type depending on the assembly form. The jelly-roll-type electrode assembly may include a winding structure of a cathode, an anode, and a separator interposed between the cathode and the anode. The stack-type electrode assembly may include a plurality of sequentially stacked cathodes, a plurality of anodes, and a plurality of separators interposed therebetween. A cathode may include a cathode current collector and a cathode active material. An anode may include an anode current collector and an anode active material.

The plurality of battery cells 111 may be connected in series and/or in parallel. For example, the plurality of battery cells 111 may be connected in series with each other. For example, the plurality of battery cells 111 may also be connected in parallel with each other. For example, when a set of two or more battery cells 111 connected in parallel with each other is defined as a bank, one bank including two or more battery cells 111, connected in parallel with each other, and another bank including two or more battery cells 111 connected in parallel with each other, may be connected in series.

Each battery cell 111 may correspond to a pouch-type battery cell, a cylindrical battery cell, or a prismatic battery cell. The electrode assembly of the pouch-type battery cell is built into a pouch cell case including an aluminum laminate sheet. The electrode assembly of the cylindrical battery cell is built into a cylindrical metal can. The electrode assembly of the prismatic battery cell is built into a square metal can.

In an embodiment, each of the battery cells 111 corresponds to a pouch-type battery cell, and a plurality of battery cells 111 may be mutually stacked in a first horizontal direction (*e.g*., the X-axis direction) within a single cell block 110. In an embodiment, each of the battery cells 111 may correspond to the pouch-type battery cell, whose length along the first horizontal direction (*e.g*., the X-axis direction) is smaller than its length along a second horizontal direction (*e.g*., the Y-axis direction). An electrode lead 113 may be connected to an end of each of the battery cells 111 along the second horizontal direction (*e.g*., the Y-axis direction).

When viewed in the plan, the cell block 110 may have a rectangular shape. In this case, the cell block 110 may have a top surface 116 and a bottom surface 115 that are opposed to each other in a vertical direction (*e.g.,* in the Z-axis direction), a first side surface 117 and a second side surface 118 that are opposed to each other in the first horizontal direction (*e.g.,* in the X-axis direction), and a front surface 112 and a rear surface 114 that are opposed to each other in the second horizontal direction (*e.g*., in the Y-axis direction). The top surface 116 of the cell block 110 may include the top surfaces of the plurality of battery cells 111, and the bottom surface 115 of the cell block 110 may include the bottom surfaces of the plurality of battery cells 111. In the present disclosure, the top surface 116 of the cell block 110 may be referred to as a first surface, the first side surface 117 of the cell block 110 may be referred to as a second surface, the second side surface 118 of the cell block 110 may be referred to as a third surface, and the bottom surface 115 of the cell block 110 may be referred to as a fourth surface.

The busbar frame 120 may be connected to an end portion along the second horizontal direction (e.g., the Y-axis direction) of the cell block 110. That is, the busbar frame 120 may be placed on the front surface 112 and/or the rear surface 114 of the cell block 110. The busbar frame 120 may support the plurality of busbars 130 and the electrode leads 113 of the plurality of battery cells 111. The busbar frame 120 may include slits through which the electrode leads 113 pass. The electrode leads 113 may include cathode leads and anode leads provided in respective battery cells 111. The busbar frame 120 may include an insulating material.

The plurality of busbars 130 may be mounted on the busbar frame 120. Each of the busbars 130 may be connected to at least one of the electrode leads 113 of the plurality of battery cells 111. For example, each of the busbars 130 may be connected to at least one of the electrode leads 113 of the plurality of battery cells 111 by welding. Each of the busbars 130 may be an inter-busbar that electrically connects different battery cells 111 by connecting to the electrode leads 113 of different battery cells 111 belonging to a cell block 110. For example, each of the busbars 130 may be a terminal-busbar that electrically connects a battery assembly 10 to an external electrical device.

The frame 200 of the battery assembly 10 of the present disclosure is configured to at least partially cover at least one of the surfaces of the cell block 110. For example, the frame 200 may be configured to at least partially cover at least one of the top surface 116, the first side surface 117, the second side surface 118, and the bottom surface 115 of the cell block 110, and may have an accommodation space 290 accommodating the cell block 110. In an embodiment, the frame 200 may include a hollow space extending in a second horizontal direction (*e.g*., the Y-axis direction), and the hollow space may be provided as an accommodation space 290 accommodating the cell block 110. The frame 200 may include a top cover plate 211 facing the top surface 116 of the cell block 110, a first side cover plate 213 facing the first side surface 117 of the cell block 110, a second side cover plate 215 facing the second side surface 118 of the cell block 110, and a bottom cover plate 217 facing the bottom surface 115 of the cell block 110. The top cover plate 211 may cover the top surface 116 of the cell block 110, the first side cover plate 213 may cover the first side surface 117 of the cell block 110, the second side cover plate 215 may cover the second side surface 118 of the cell block 110, and the bottom cover plate 217 may cover the bottom surface 115 of the cell block 110. The plurality of battery cells 111 may be stacked in the first horizontal direction (*e.g.,* in the X-axis direction) between the first side cover plate 213 and the second side cover plate 215. According to an embodiment, the frame 200 may have a rectangular tube shape. The first side cover plate 213 may be connected to one side of the top cover plate 211 and one side of the bottom cover plate 217, and the second side cover plate 215 may be connected to the other side of the top cover plate 211 and the other side of the bottom cover plate 217. According to an embodiment, a plurality of venting areas 221 are formed in the top cover plate 211 of the frame 200, and a plurality of venting holes 231 are arranged in each of the venting areas 221.

In an embodiment, an adhesive layer may be interposed between the cell block 110 and the frame 200 to fix the cell block 110 to the frame 200. The adhesive layer may include, for example, a thermal interface material (TIM) and/or a thermal resin. The adhesive layer may be interposed between the cell block 110 and the top cover plate 211, between the cell block 110 and the first side cover plate 213, between the cell block 110 and the second side cover plate 215, and/or between the cell block 110 and the bottom cover plate 217.

The frame 200 may have a single piece structure or a single integrated structure.

According to an embodiment, the frame 200 of the battery assembly 10 of the present disclosure may include a plurality of venting holes 231 formed to exhaust gas generated from, for example, the cell block 110. Each of the venting holes 231 may be formed, for example, by penetrating the top cover plate 211 of the frame 200 along the Z-axis direction. The accommodation space 290 in the frame 200 may be connected to an external space ES outside the frame 200 through the plurality of venting holes 231. The venting holes 231 may be circular, but are not limited thereto, and the venting holes 231 may have a polygonal shape such as a square. For example, FIG. 1 illustrates that the plurality of venting holes 231 are formed in the top cover plate 211, but the present disclosure is not limited thereto. A plurality of venting holes 231 may be arranged in at least one of, for example, the first side cover plate 213, the second side cover plate 215, and the bottom cover plate 217.

In an embodiment, when the plurality of venting holes 231 are provided in the top cover plate 211 of the frame 200, directional venting may be implemented in which high-temperature gas, originating from the cell block 110, is discharged in one direction (*e.g.,* an upward direction) through the plurality of venting holes 231 formed in the top cover plate 211.

In an embodiment, a plurality of venting areas 221, which are spaced apart from each other, may be formed in the top cover plate 211, and the plurality of venting holes 231 may be formed in each of the venting areas 221. In an embodiment, the plurality of venting areas 221 may be arranged in the first horizontal direction (*e.g*., in the X-axis direction) and the second horizontal direction (*e.g*., in the Y-axis direction) on the top cover plate 211 of the frame 200. In an embodiment, in each of the venting areas 221, the plurality of venting holes 231 may be spaced apart from each other at equal intervals, and the number of venting holes 231 provided in each of the venting areas 221 may range from 10 to 100.

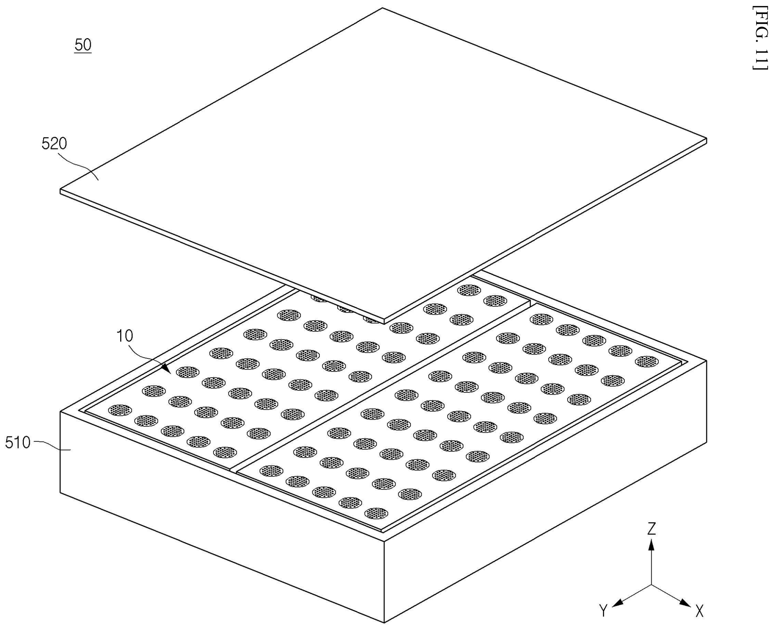

Referring to FIG. 4, spark particles SP generated at the cell level due to a short circuit between the cathode and the anode of each battery cell 111 in the cell block 110 become an ignition source that causes a flame. For example, residual oxygen in a battery pack (50 of FIG. 11) in which a plurality of cell blocks 110 are arranged, venting gas generated by the vaporization of the electrolyte, and spark particles SP generated at the cell level due to a short circuit between the cathode and the anode of a battery cell 111 constitute the three elements of a flame. When the three elements of a flame meet in the battery pack 50, a flame may be generated in the battery pack 50.

Referring to FIG. 4, the venting holes 231 may be manufactured in various ways. According to an embodiment, the venting holes 231 may be manufactured by using a press to create perforations (*e.g*., holes, slots, or decorative patterns) in the corresponding portion of the top cover plate 211, or by forming the holes through, for example, laser etching or chemical etching in the corresponding portion of the top cover plate 211. In an embodiment, the width W1 of the venting holes 231 may be smaller than about 0.61 mm. Here, the width W1 of the venting holes 231 may refer to the maximum width or diameter of the venting holes 231. When the width W1 of the venting holes 231 is about 0.61 mm or more, spark particles SP generated at the cell level due to a short circuit between the cathode and the anode of a battery cell 111 may escape to the external space ES of the frame 200, and the spark particles SP may meet the venting gas and the residual gas within the battery pack 50, and generate a flame within the battery pack 50. Therefore, when the width W1 of the venting holes 231 is configured to be less than about 0.61 mm or 0.43 mm or less, spark particles SP generated at the cell level due to a short circuit between the cathode and the anode of a battery cell 111 may be prevented from escaping to the external space ES of the frame 200 and may be allowed to remain in the accommodation space 290 within the frame 200. In this way, when the spark particles SP are blocked from escaping to the external space ES of the frame 200, the spark particles SP may be blocked from meeting with the residual oxygen in the battery pack 50, suppressing a flame from being generated within the battery pack 50. It has been confirmed that a flame is generated within the battery pack 50 when the width W1 of the venting holes 231 was about 0.61 mm or more, and it has been confirmed that a flame is not generated within the battery pack 50 when the width W1 of the venting holes 231 was less than about 0.61 mm or about 0.43 mm or less.

In an embodiment, the width W1 of the venting holes 231 may be about 0.01 mm or more. When the width W1 of the venting holes 231 is smaller than about 0.01 mm, the gas exhaust flow rate through the venting holes 231 is too small, making it difficult to achieve directional venting through the plurality of venting holes 231.

In an embodiment, the width W1 of the venting holes 231 may be about 0.01 mm or more and smaller than about 0.61 mm. Alternatively, the width W1 of the venting holes 231 may be about 0.01 mm or more and 0.59 mm or less, 0.01 mm or more and 0.57 mm or less, 0.01 mm or more and 0.55 mm or less, 0.01 mm or more and 0.53 mm or less, 0.01 mm or more and 0.51 mm or less, 0.01 mm or more and 0.49 mm or less, 0.01 mm or more and 0.47 mm or less, 0.01 mm or more and 0.45 mm or less, or may be about 0.01 mm or more and 0.43 mm or less.

### (Second Embodiment)

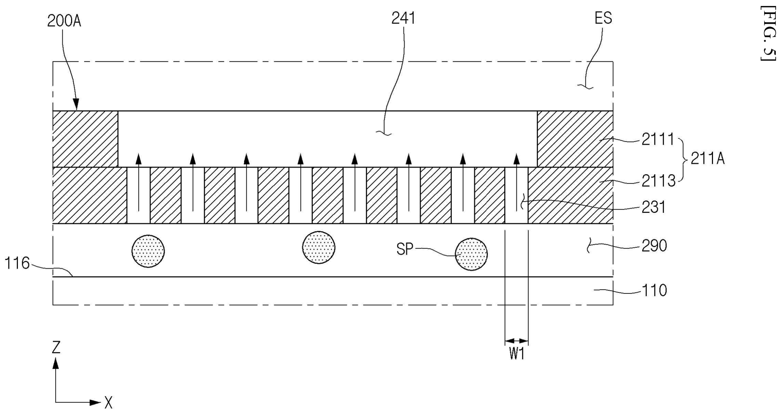

FIG. 5 is a cross-sectional view illustrating a portion of a battery assembly 10 according to an embodiment of the present disclosure. Hereinafter, the battery assembly of FIG. 5 will be described, focusing on the differences from the battery assembly 10 described with reference to FIGS. 1 to 4.

Referring to FIG. 5, the top cover plate 211A of the frame 200A of the battery assembly 10 may include a top main plate 2111 and a top mesh plate 2113. The top main plate 2111 may be coupled to or integrated with the first side cover plate 213 and the second side cover plate 215. The top main plate 2111 may be coupled to the top mesh plate 2113. FIG. 5 exemplifies that the top mesh plate 2113 is coupled to the inner surface of the top main plate 2111 facing the top surface 116 of the cell block 110, but the top mesh plate 2113 may also be coupled to the outer surface of the top main plate 2111.

The top mesh plate 2113 of the frame 200A has a plurality of venting holes 231 formed therein with a width W1 in order to block the discharge of spark particles SP, and the top main plate 2111 has a plurality of holes 241. The plurality of holes 241 in the top main plate 2111 may define a plurality of venting areas. The plurality of venting holes 231, which are spaced at equal intervals, may be formed in each of the plurality of areas of the top mesh plate 2113 that overlap with the plurality of holes 241 formed in the top main plate 2111. For example, 10 to 100 venting holes 231 may be formed in each of the plurality of areas of the top mesh plate 2113 that overlap with the plurality of holes 241 in the top main plate 2111.

### (Third Embodiment)

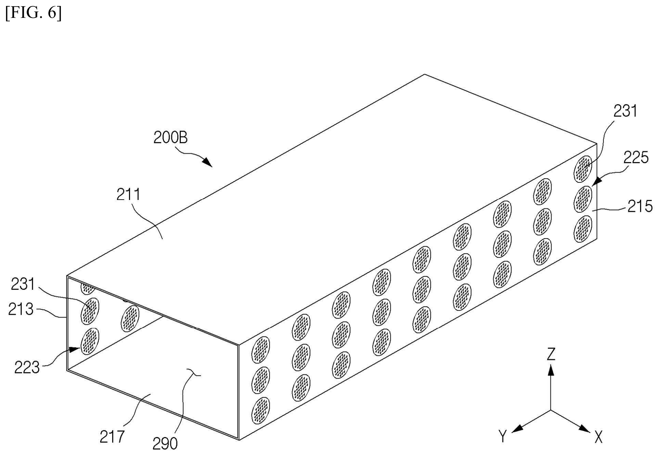

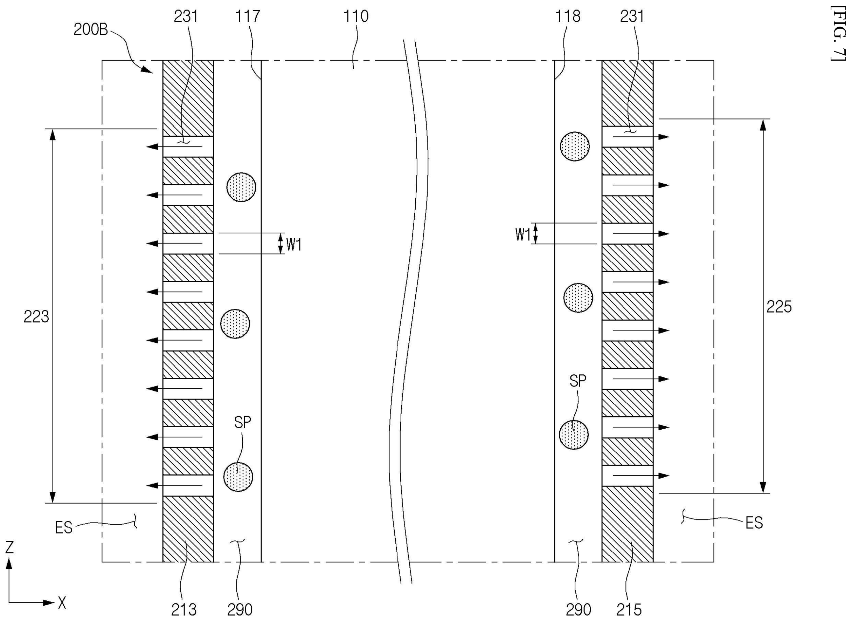

FIG. 6 is a cross-sectional view illustrating a frame 200B of a battery assembly 10 according to an embodiment of the present disclosure. FIG. 7 is a cross-sectional view illustrating a portion of the battery assembly 10 according to an embodiment of the present disclosure. Hereinafter, the battery assembly of FIGS. 6 and 7 will be described, focusing on the differences from the battery assembly 10 described with reference to FIGS. 1 to 4.

Referring to FIGS. 6 and 7, a plurality of venting holes 231 may be formed in at least one of the first side cover plate 213 and the second side cover plate 215 of the frame 200B of the battery assembly 10 of the present embodiment.

In an embodiment, a plurality of venting areas 223, which are spaced apart from each other, are formed in the first side cover plate 213 of the frame 200B, and a plurality of venting holes 231 with a width W1 in order to block the discharge of spark particles SP may be arranged in each of the venting areas 223. The plurality of venting areas 223 may be arranged in the vertical direction (*e.g.,* in the Z-axis direction) and the second horizontal direction (*e.g*., in the Y-axis direction) on the first side cover plate 213 of the frame 200B. In each of the venting areas 223, the plurality of venting holes 231 may be spaced apart from each other at equal intervals, and the number of venting holes 231 provided in each of the venting areas 223 may range from 10 to 100.

In an embodiment, a plurality of venting areas 225, which are spaced apart from each other, may be formed in the second side cover plate 215 of the frame 200B, and a plurality of venting holes 231 with a width W1 in order to block the discharge of spark particles SP may be arranged in each of the venting areas 225. The plurality of venting areas 225 may be arranged in the vertical direction (e.g., in the Z-axis direction) and the second horizontal direction (*e.g.*, in the Y-axis direction) on the first side cover plate 215. In each of the venting areas 225, the plurality of venting holes 231 may be spaced apart from each other at equal intervals, and the number of venting holes 231 provided in each of the venting areas 225 may range from 10 to 100.

FIG. 6 exemplifies that the venting holes 231 are arranged in the first side cover plate 213 and the second side cover plate 215 of the frame 200B, but in some embodiments, the venting holes 231 may also be arranged in the top cover plate 211 of the frame 200B.

### (Fourth Embodiment)

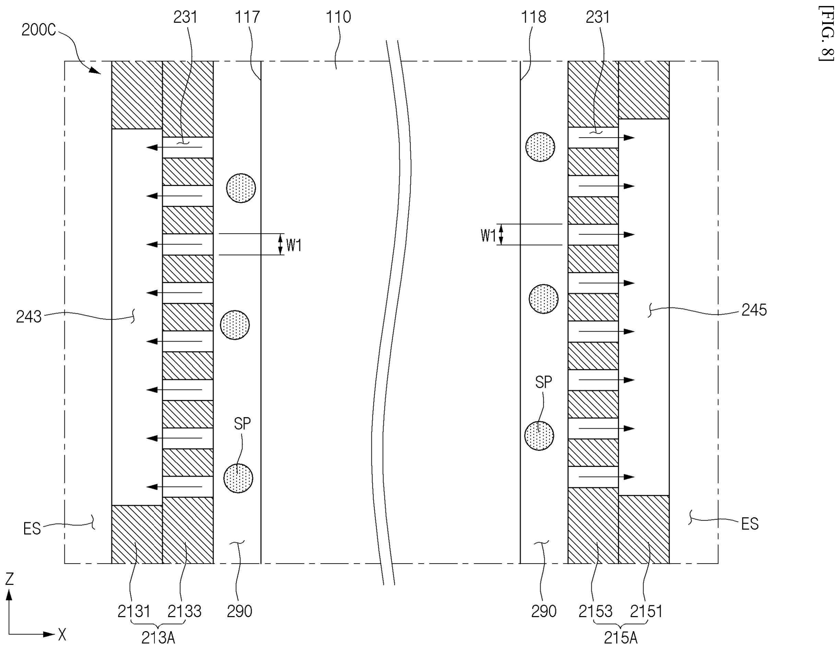

FIG. 8 is a cross-sectional view illustrating a portion of a battery assembly 10 according to an embodiment of the present disclosure. Hereinafter, the battery assembly 10 of FIG. 8 will be described, focusing on the differences from the battery assembly 10 described with reference to FIGS. 6 and 7.

Referring to FIG. 8, the first side cover plate 213A of the frame 200C of the battery assembly 10 may include a first side main plate 2131 and a first side mesh plate 2133. The first side main plate 2131 may be coupled to or integrated with the top cover plate 211. The first side main plate 2131 may be coupled to the first side mesh plate 2133. FIG. 8 exemplifies that the first side mesh plate 2133 is coupled to the inner surface of the first side main plate 2131 facing the first side surface 117 of the cell block 110. However, the first side mesh plate 2133 may also be coupled to the outer surface of the first side main plate 2131.

The plurality of venting holes 231 with a width W1 in order to block the discharge of spark particles SP may be formed in the first side mesh plate 2133, and a plurality of holes 243 may be formed in the first side main plate 2131. The plurality of holes 243 in the first side main plate 2131 may define a plurality of venting areas. The plurality of venting holes 231, which are spaced at equal intervals, may be in each of the plurality of areas of the first side mesh plate 2133 that overlap the plurality of holes 243 in the first side main plate 2131. For example, 10 to 100 venting holes 231 may be arranged in each of the plurality of areas of the first side mesh plate 2133 that overlap with the plurality of holes 243 in the first side main plate 2131.

The second side cover plate 215A of the frame 200C of the battery assembly 10 may include a second side main plate 2151 and a second side mesh plate 2153. The second side main plate 2151 may be coupled to or integrated with the top cover plate 211. The second side main plate 2151 may be coupled to the second side mesh plate 2153. FIG. 8 exemplifies that the second side mesh plate 2153 is coupled to the inner surface of the second side main plate 2151 facing the second side surface 118 of the cell block 110. However, the second side mesh plate 2153 may also be coupled to the outer surface of the second side main plate 2151.

The plurality of venting holes 231 with a width W1 designed to block the discharge of spark particles SP may be formed in the second side mesh plate 2153 of the frame 200C, and a plurality of holes 245 may be formed in the second side main plate 2151. The plurality of holes 245 in the second side main plate 2151 may define a plurality of venting areas. The plurality of venting holes 231, which are spaced at equal intervals, may be arranged in each of the plurality of areas of the second side mesh plate 2153 that overlap with the plurality of holes 245 in the second side main plate 2151. For example, 10 to 100 venting holes 231 may be arranged in each of the plurality of areas of the second side mesh plate 2153 that overlap the plurality of holes 245 in the second side main plate 2151.

### (Fifth Embodiment)

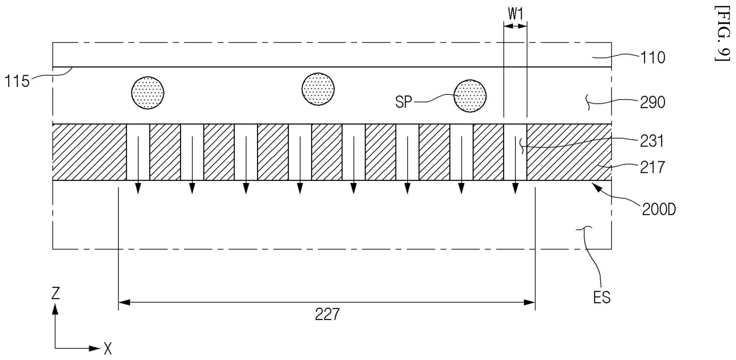

FIG. 9 is a cross-sectional view illustrating a portion of a battery assembly 10 according to an embodiment of the present disclosure. Hereinafter, the battery assembly 10 of FIG. 9 will be described, focusing on the differences from the battery assembly 10 described with reference to FIGS. 1 to 4.

Referring to FIG. 9, in the frame 200D of the battery assembly 10, a plurality of venting holes 231 may be arranged in the bottom cover plate 217. In an embodiment, a plurality of venting areas 227, which are spaced apart from each other, may be formed in the bottom cover plate 217, and a plurality of venting holes 231 with a width W1 in order to block the discharge of spark particles SP may be arranged in each of the venting areas 227. The plurality of venting areas 227 may be arranged in the first horizontal direction (*e.g.,* in the X-axis direction) and the second horizontal direction (*e.g.,* in the Y-direction) on the top cover plate 217 of the frame 227. In each of the venting areas 227, a plurality of venting holes 231 may be spaced apart at equal intervals. The number of venting holes 231 formed in each of the venting areas 227 may range from 10 to 100.

### (Sixth Embodiment)

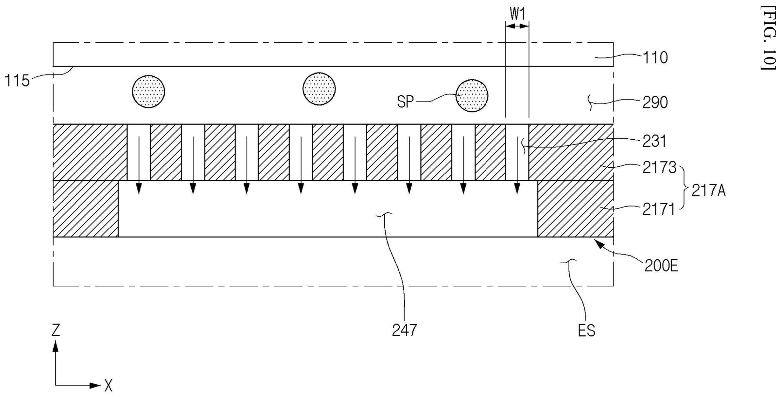

FIG. 10 is a cross-sectional view illustrating a portion of a battery assembly 10 according to an embodiment of the present disclosure. Hereinafter, the battery assembly 10 of FIG. 10 will be described, focusing on the differences from the battery assembly 10 described with reference to FIG. 9.

Referring to FIG. 10, the bottom cover plate 217A of the frame 200E of the battery assembly 10 may include a bottom main plate 2171 and a bottom mesh plate 2173. The bottom main plate 2171 may be coupled to or integrated with the first side cover plate 213 and the second side cover plate 215. The bottom main plate 2171 may be coupled to the bottom mesh plate 2173. FIG. 10 exemplifies that the bottom mesh plate 2173 is coupled to the inner surface of the bottom main plate 2171 facing the bottom surface 115 of the cell block 110, but the bottom mesh plate 2173 may also be coupled to the outer surface of the bottom main plate 2171.

The plurality of venting holes 231 with a width W1 in order to block the discharge of spark particles SP may be formed in the bottom mesh plate 2173 of the frame 200E, and a plurality of holes 247 may be formed in the bottom main plate 2171. The plurality of holes 247 in the bottom main plate 2171 may define a plurality of venting areas. The plurality of venting holes 231, which are spaced at equal intervals, may be formed in each of the plurality of areas of the bottom mesh plate 2173 that overlap the plurality of holes 247 in the bottom main plate 2171. For example, 10 to 100 venting holes 231 may be formed in each of the plurality of areas of the bottom mesh plate 2173 that overlap the plurality of holes 247 in the bottom main plate 2171.

### (Seventh Embodiment)

FIG. 11 is a perspective view illustrating a battery pack 50 according to an embodiment of the present disclosure.

Referring to FIG. 11 together with FIGS. 1 to 4, the battery pack 50 may include a pack housing 510, a battery assembly 10 mounted within the pack housing 510, and a pack cover 520. The battery pack 50 may include one or more battery assemblies 10 mounted within the pack housing 510. In an embodiment, the battery pack 50 may include a plurality of battery assemblies 10 arranged in the first horizontal direction (*e.g*., in the X-axis direction) and/or the second horizontal direction (*e.g.,* in the Y-axis direction). The pack housing 510 may provide an accommodation space in which the battery assemblies 10 are accommodated. The pack housing 510 may include a bottom plate supporting the battery assemblies 10 and side walls connected to the edges of the bottom plate. The pack cover 520 may be coupled to the pack housing 510 to cover the battery assemblies 10 accommodated in the pack housing 510.

According to an embodiment of the present disclosure, venting holes 231 are formed in the frame 200 of the battery assembly 10 and are each configured to have a dimension to block the discharge of spark particles SP. As a result, spark particles SP generated, for example, due to a short circuit between the cathode and the anode at the cell level may be blocked from escaping to the external space ES of the frame 200. In this way, one of the three elements of the flame, the ignition source, may be removed, thereby suppressing the flame from being generated within the battery pack 50.

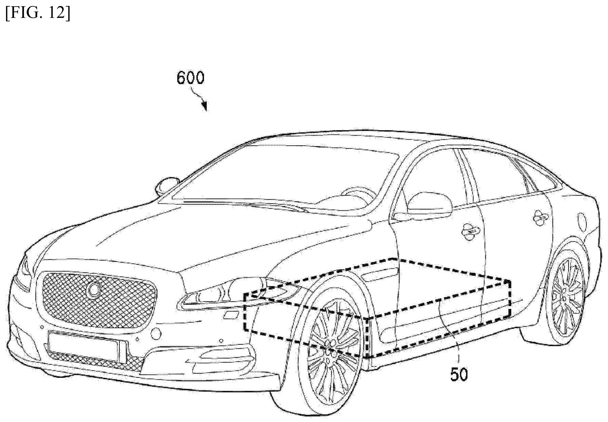

Referring to FIG. 12, a vehicle 600 according to an embodiment of the present disclosure may include one or more battery packs 50 as described in the previous embodiments. The vehicle 600 according to the present disclosure may be, for example, an electric vehicle, a hybrid vehicle, or a plug-in hybrid vehicle. The vehicle 600 includes various types of vehicles, such as four-wheeled vehicles, as well as two-wheeled or three-wheeled vehicles. In particular, the vehicle 600 may be operated by being fed with power from the battery pack 50 according to an embodiment of the present disclosure.

In the foregoing, the present disclosure has been described in detail with reference to the drawings and embodiments. However, the embodiments described in this specification and the configurations illustrated in the drawings are merely example embodiments of the present disclosure, and do not represent all the technical ideas of the present disclosure. Therefore, it should be understood that, at the time of filing, there may be various equivalents and modifications that could serve as alternatives to the embodiments.

## Claims

1. A battery assembly comprising:
a cell block including a plurality of battery cells; and
a frame covering at least one surface of the cell block,
wherein the frame includes a plurality of venting holes configured to exhaust gas, and
wherein each of the plurality of venting holes has a width of about 0.01 mm or more and less than 0.61 mm.

2. The battery assembly of claim 1, wherein
the frame includes a top cover plate facing a top surface of the cell block, a bottom cover plate facing a bottom surface of the cell block, a first side cover plate facing a first side surface of the cell block, and a second side cover plate facing a second side surface of the cell block, and
wherein the plurality of venting holes are formed in the top cover plate.

3. The battery assembly of claim 2, wherein the top cover plate includes:
a first main plate including a plurality of holes; and
a first mesh plate including the plurality of venting holes and coupled to the first main plate, and
wherein the plurality of venting holes are arranged in each of areas of the first mesh plate that overlap with the plurality of holes in the first main plate.

4. The battery assembly of claim 1, wherein
the frame includes a top cover plate facing a top surface of the cell block, a bottom cover plate facing a bottom surface of the cell block, a first side cover plate facing a first side surface of the cell block, and a second side cover plate facing a second side surface of the cell block, and
wherein the bottom cover plate includes the plurality of venting holes.

5. The battery assembly of claim 1, wherein
the frame includes:
a top cover plate facing a top surface of the cell block;
a bottom cover plate facing a bottom surface of the cell block;
a first side cover plate facing a first side surface of the cell block; and
a second side cover plate facing a second side surface of the cell block, and
wherein at least one of the first side cover plate and the second side cover plate includes the plurality of venting holes.

6. The battery assembly of claim 5, wherein
at least one of the first side cover plate and the second side cover plate includes:
a second main plate including a plurality of holes; and
a second mesh plate including the plurality of venting holes and coupled to the second main plate, and
wherein the plurality of venting holes are arranged in each of areas of the second mesh plate that overlap the plurality of holes in the second main plate.

7. The battery assembly of claim 1, wherein
the frame includes a plurality of venting areas, and
wherein the plurality of venting holes are arranged at equal intervals in each of the plurality of venting areas.

8. The battery assembly of claim 7, wherein
a number of venting holes in each of the plurality of venting areas ranges from 10 to 100.

9. The battery assembly of claim 1, wherein
the frame has a single-piece structure.

10. The battery assembly of claim 1, wherein
the frame includes:
a top cover plate facing a top surface of the cell block;
a bottom cover plate facing a bottom surface of the cell block;
a first side cover plate facing a first side surface of the cell block; and
a second side cover plate facing a second side surface of the cell block, and
wherein the plurality of battery cells is stacked in a first direction between the first side cover plate and the second side cover plate.

11. A battery pack comprising:
a pack housing:
a battery assembly accommodated in the pack housing; and
a pack cover coupled to the pack housing to cover the battery assembly,
wherein the battery assembly includes;
a cell block including a plurality of battery cells, and
a frame covering at least one surface of the cell block,
wherein the frame includes a plurality of venting holes configured to exhaust gas, and
wherein each of the plurality of venting holes has a width of about 0.01 mm or more and less than 0.61 mm.

12. The battery pack of claim 11, wherein
the frame includes:
a top cover plate facing a top surface of the cell block;
a bottom cover plate facing a bottom surface of the cell block;
a first side cover plate facing a first side surface of the cell block; and
a second side cover plate facing a second side surface of the cell block, and
wherein the top cover plate includes the plurality of venting holes.

13. The battery pack of claim 12, wherein
the top cover plate includes a plurality of venting areas, and
wherein the plurality of venting holes are arranged at equal intervals in each of the plurality of venting areas.

14. The battery pack of claim 12, wherein
the top cover plate includes:
a first main plate including a plurality of holes; and
a first mesh plate including the plurality of venting holes and coupled to the first main plate, and
wherein the plurality of venting holes are arranged at equal intervals in each of areas of the first mesh plate that overlap with the plurality of holes in the first main plate.

15. The battery pack of claim 11, wherein
the frame includes:
a top cover plate facing a top surface of the cell block;
a bottom cover plate facing a bottom surface of the cell block;
a first side cover plate facing a first side surface of the cell block; and
a second side cover plate facing a second side surface of the cell block, and
wherein at least one of the first side cover plate and the second side cover plate includes the plurality of venting holes.
